# FASCICULE DE BREVET EUROPEEN

(11) **EP 0 623 049 B1**
(45) Date de publication et mention de la délivrance du brevet: **20.01.1999**
(21) Numéro de dépôt: 93922007.5
(22) Date de dépôt: 07.10.1993
(51) Int. Cl.: B01D 63/08, B01D 69/10, B01D 25/26

(54) **UNITE INORGANIQUE DE FILTRATION COMPORTANT AU MOINS UN RESEAU INTEGRE DE CIRCULATION D'UN MILIEU LIQUIDE A TRAITER ET/OU DU FILTRAT RECUPERE**
ANORGANISCHE FILTERSTRUKTUR MIT MINDESTENS EINEM INTEGRALEN KANALNETZWERK FÜR DIE ZU FILTERNDE FLÜSSIGKEIT UND/ODER FÜR DAS GENOMMENE FILTRAT
INORGANIC FILTERING UNIT COMPRISING AT LEAST ONE INTEGRATED NETWORK FOR THE FLOW OF A LIQUID MEDIUM TO BE TREATED AND/OR OF THE RECOVERED FILTRATE

(30) Priorité: 09.10.1992 FR 9212379
(43) Date de publication de la demande: 09.11.1994
(73) Titulaire: T.A.M.I. INDUSTRIES, F-26110 Nyons (FR)
(72) Inventeur: LESCOCHE, Philippe, F-26110 Nyons (FR)
(74) Mandataire: Thibault, Jean-Marc
(86) Numéro de dépôt international: FR9300994
(87) Numéro de publication internationale: WO9408705

(56) Documents cités:
- EP-A- 0 259 109
- WO-A-93/00154
- FR-A- 2 061 934
- FR-A- 2 182 612
- FR-A- 2 262 550
- GB-A- 764 911

## Description

### DOMAINE TECHNIQUE:

La présente invention concerne le domaine technique de la séparation moléculaire ou particulaire mettant en oeuvre des éléments de séparation, appelés généralement membranes et constitués à partir de matériaux inorganiques.

L'objet de l'invention vise, plus précisément, la réalisation d'une unité de filtration inorganique adaptée pour permettre de concentrer, trier ou extraire, des espèces moléculaires ou particulaires contenues dans un milieu liquide qui exerce une pression donnée sur la membrane.

L'objet de l'invention trouve une application particulièrement avantageuse dans le domaine de la nano-filtration, l'ultra-filtration, la micro-filtration, la filtration ou l'osmose inverse.

### TECHNIQUE ANTERIEURE:

L'état de la technique a proposé par le brevet **FR 2 061 934** un bloc de filtration de nature minérale constitué d'éléments de filtration empilés. Un premier réseau de canaux, parallèles entre eux de section circulaire, sont aménagés sur les faces en regard de deux éléments de filtration consécutifs. La surface des canaux est recouverte d'une couche séparatrice assurant la filtration d'un milieu liquide circulant à l'intérieur du premier réseau de canaux. Les éléments de filtration sont aménagés pour comporter un second réseau de canaux de section circulaire s'étendant selon une direction perpendiculaire à celle des canaux du premier réseau. Les canaux du second réseau sont destinés à récupérer le filtrat ayant traversé les éléments de filtration à partir des couches séparatrices.

Les canaux des deux réseaux débouchent sur les quatre côtés du bloc de filtration ainsi constitué. Les côtés du bloc sont destinés à recevoir des plaques aménagées pour comporter des canalisations indépendantes d'amenée du milieu liquide à traiter et de récupération du filtrat, adaptées pour communiquer respectivement avec le premier et le second réseaux de canaux. La mise en oeuvre de telles plaques présente des inconvénients dans la mesure où elles nécessitent de réaliser un étanchement parfait entre les quatre côtés du bloc et les plaques rapportées. De plus, l'opération de montage des plaques ne peut pas être facilement réalisée lors du processus de fabrication du bloc, ce qui interdit une fabrication industrielle d'un tel bloc de filtration. Il doit être considéré, également, que le caractère monobloc d'un tel module impose de le réaliser à partir d'un matériau poreux. Cette contrainte rend le module peu performant en raison de l'épaisseur des parois qu'elle impose.

Il est connu, également, dans l'état de la technique, par la demande de brevet **FR-A-2 262 550**, un module destiné à l'échange d'énergie et susceptible d'être appliqué au domaine de la filtration. Un tel module est constitué à partir d'un élément poreux monobloc, à l'intérieur duquel sont aménagés au moins deux réseaux indépendants de couches parallèles de canaux régulièrement croisés. Les canaux de chaque réseau sont reliés entre-eux par des canalisations.

Un tel module, qui a été conçu pour constituer un échangeur de chaleur, se trouve mal adapté pour assurer une fonction de filtration.

En effet, ce module est réalisé à partir d'un matériau poreux, sous la forme d'un élément monobloc, conduisant à l'obtention d'un module peu performant en raison de l'épaisseur des parois, ce qui provoque une perte de charge importante. Par ailleurs, un tel module peut comporter des ponts de renforcement formant des continuités de matière et conçus pour relier deux parois séparatrices opposées, afin d'augmenter la résistance mécanique des parois. Il s'avère que la mise en oeuvre de tels ponts de renforcement réduit la capacité de filtration pour une même surface utilisée de matière.

### EXPOSE DE L'INVENTION:

La présente invention vise à remédier aux divers inconvénients des techniques antérieures en proposant une unité de filtration inorganique conçue, d'une part, pour comporter au moins un et, de préférence, deux réseaux de circulation étanches l'un par rapport à l'autre, respectivement pour le milieu liquide à traiter et le filtrat et, d'autre part, pour présenter une capacité de filtration optimisée par rapport au volume de matière utilisée.

L'objet de l'invention vise également à offrir une unité inorganique de filtration, conçue pour permettre une fabrication industrielle intégrant dans son processus de fabrication, la réalisation des canalisations d'amenée du liquide à traiter et des canalisations de récupération du filtrat.

Pour atteindre cet objectif, l'unité de filtration, selon l'invention, comporte au moins une structure poreuse rigide inorganique, interposée entre un élément d'extrémité et un contre-élément d'extrémité, chaque structure poreuse présentant une première et une seconde faces principales opposées l'une de l'autre, et comportant une cavité ménagée dans la structure à distance des deux faces en délimitant des appuis qui assurent une continuité de matière entre les faces opposées, la cavité ou les faces principales étant recouvertes par au moins une couche séparatrice.

Selon l'invention, la cavité est confinée à l'intérieur de la structure poreuse en étant délimitée par au moins un appui formant une bordure périphérique, la cavité débouchant par au moins un conduit à parois étanches sur au moins l'une des faces principales, et la structure poreuse comporte au moins un canal à parois étanches débouchant sur les deux faces et ménagé pour traverser un appui, en vue de constituer un premier réseau de circulation étanche vis-à-vis de la cavité.

Diverses autres caractéristiques ressortent de la description faite ci-dessous en référence aux dessins annexés qui montrent, à titre d'exemples non limitatifs, des formes de réalisation de l'objet de l'invention.

### BREVE DESCRIPTION DES DESSUS:

La **fig. 1** est une vue en perspective d'un premier mode de réalisation d'une unité de filtration conforme à l'invention.
La **fig. 2** est une vue en coupe prise sensiblement selon les lignes **II-II** de la **fig. 1**.
Les **fig. 3 et 4** sont des vues analogues à la **fig. 2** et montrant d'autres exemples de réalisation d'une unité de filtration selon l'invention.
La **fig. 5** est une vue en perspective montrant une unité de filtration conforme à l'invention.

### MEILLEURE FACON DE REALISER L'INVENTION:

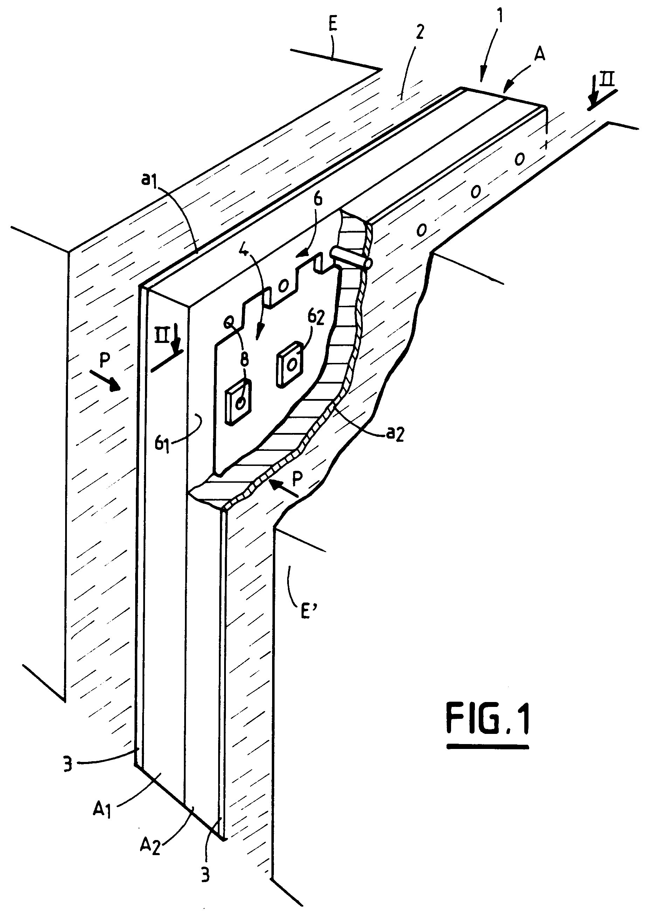

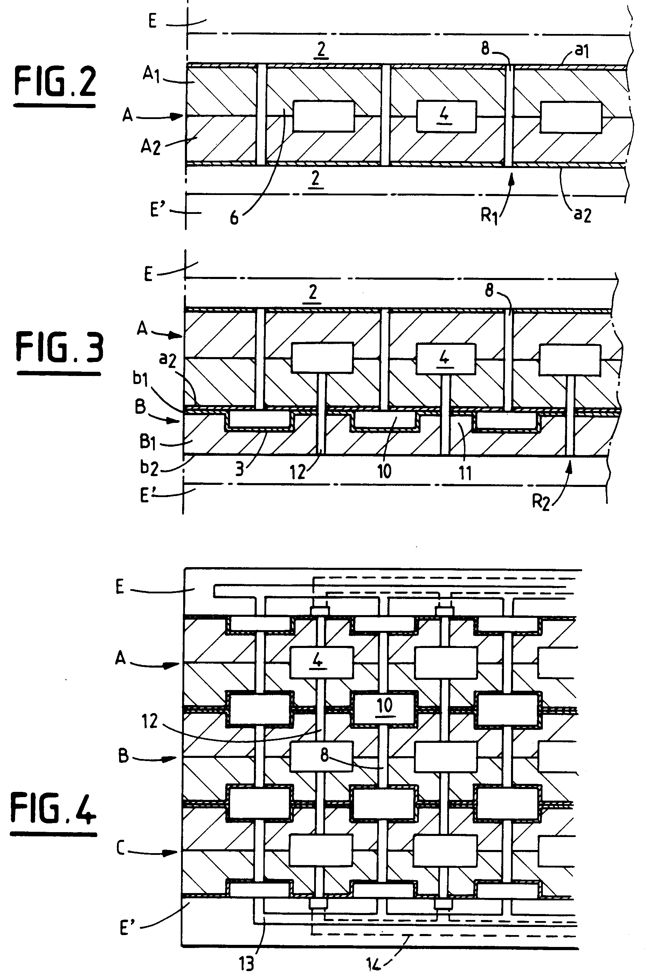

Les **fig. 1 et 2** illustrent un premier mode de réalisation d'une unité inorganique de filtration **1**, conforme à l'invention, adaptée pour assurer la séparation ou la filtration de molécules ou de particules contenues dans un milieu liquide **2**, de nature diverse, comportant une phase solide ou non. L'unité de filtration **1** est composée d'au moins une structure poreuse rigide inorganique **A** interposée entre un élément d'extrémité **E** et un contre-élément d'extrémité **E'**.

La structure poreuse **A** présente une première **a**_{**1**} et une seconde **a**_{**2**} faces principales opposées l'une de l'autre. Dans l'exemple illustré, chaque face principale **a**_{**1**} et **a**_{**2**} est recouverte par au moins une couche séparatrice **3**, destinée à être en contact avec le milieu liquide **2** qui s'établit entre ces faces et les éléments d'extrémité **E** et **E'**. La nature de la ou des couches séparatrices **3** est choisie en fonction du pouvoir de séparation ou de filtration à obtenir et forme avec la structure poreuse **A** une liaison intime, de manière que la pression **P** provenant du milieu liquide **2** soit transmise à la structure poreuse **A**. Il est à noter que, classiquement, le diamètre des pores de cette ou de ces couches **3** est considérablement plus faible que celui de la structure poreuse. Par exemple, le rapport du diamètre structure poreuse **A** sur couches **3** est de l'ordre de 10 000. Cette ou ces couches **3** peuvent être déposées à partir, par exemple, de suspensions contenant au moins un oxyde métallique et classiquement utilisé dans la production des éléments de filtration minéraux. Cette ou ces couches sont soumises après séchage à une opération de frittage qui permet de les consolider et de les lier entre elles et à la structure poreuse **A**.

Tel que cela apparait plus précisément aux **fig. 1** et **2**, la structure poreuse **A** comporte des moyens, telle qu'une cavité **4** ménagée à distance des faces **a**_{**1**} et **a**_{**2**} et, adaptée pour récupérer le filtrat ayant traversé la structure poreuse **A** à partir des couches séparatrices **3**. La cavité **4** est ménagée de manière à laisser subsister selon son plan d'extension qui est considéré comme parallèle aux faces **a**_{**1**} et **a**_{**2**}, au moins un appui **6** assurant une continuité de matière entre les faces opposées **a**_{**1**}**, a**_{**2**} de la structure poreuse **A**. Dans l'exemple illustré selon lequel la structure poreuse **A** est formée par deux plaques ou carreaux **A**_{**1**}, **A**_{**2**}, la cavité **4** est réalisée sur au moins une et, de préférence, sur les deux faces placées en correspondance des plaques **A**_{**1**} et **A**_{**2**}.

Selon l'invention, le ou les appuis **6** sont aménagés pour délimiter la cavité **4**, de manière à constituer une bordure périphérique **6**_{**1**} destinée à assurer une surface de contact périmètrique entre les deux plaques **A**_{**1**} et **A**_{**2**}. La cavité **4** est ainsi confinée à l'intérieur de la structure poreuse **A** en débouchant par exemple, par des passages non représentés et réalisés au niveau des chants de la structure poreuse afin de récupérer le filtrat. Dans le cas d'une réalisation symétrique des deux plaques **A**_{**1**} et **A**_{**2**}, les bordures périphériques **6**_{**1**} se trouvent en contact mutuel et sont utilisées pour permettre la liaison des plaques entre-elles par l'intermédiaire d'un produit de liaison, tel qu'une couche de verte ou d'argile déposée sur les bordures et soumise à un traitement thermique. Il est à noter qu' un ou plusieurs appuis **6**_{**2**}, à caractère ponctuel, sont réalisés afin d'assurer une fonction qui sera explicitée plus précisément dans la suite de la description.

Selon une caractéristique de l'invention, le ou les appuis **6** sont utilisés pour assurer la réalisation d'au moins un et, en général, d'une série de canaux **8** débouchant sur les deux faces **a**_{**1**} et **a**_{**2**} de la structure poreuse **A**, en vue de constituer un premier réseau **R1** de circulation du milieu liquide **2**, étanche vis-à-vis de la cavité **4** de récupération du filtrat. Les canaux **8** sont ainsi réalisés pour traverser de part en part, la structure poreuse **A**, en étant isolés de la cavité **4** en raison de leur passage à travers les appuis **6**. Afin d'éviter un mélange entre le produit à traiter et le filtrat par l'intermédiaire de la porosité des plaques **A**_{**1**}**, A**_{**2**}**,** les canaux **8** sont rendus étanches à l'aide d'un produit adapté identique ou non à celui ayant servi à lier les appuis **6** entre eux. A titre d'exemple, l'étanchéité des canaux **8** peut être réalisée à partir d'un polymère thermofusible du type fluoré ou non, d'une résine, d'émaux ou de verres. Il est à noter que les parois des canaux **8** peuvent être rendues étanches à l'aide d'un élément non poreux rapporté.

Selon un autre mode de réalisation de l'unité inorganique conforme à l'invention, la structure poreuse rigide **A**, est associée, sur au moins l'une de ses faces, par exemple **a**_{**2**}, à au moins une structure complémentaire poreuse rigide inorganique **B**. Comme cela apparaît plus précisément à la **fig. 3**, la structure poreuse **B** comporte une plaque ou un carreau **B**_{**1**} dont l'une de ses faces **b**_{**1**}, est recouverte par une couche séparatrice **3**. Une telle face **b**_{**1**} est destinée à être en contact avec la face **a**_{**2**} de la structure **A**, en délimitant avec cette dernière au moins une chambre **10** ménagée pour communiquer avec les canaux **8**. La chambre **10** est réalisée de manière à laisser subsister, dans son plan d'extension parallèle aux faces de la structure, au moins un renfort ou un appui **11** formant une continuité de matière entre les deux faces opposées principales de la plaque **B**_{**1**}.

De préférence, les renforts **11** font au moins partie d'une bordure périphérique de la plaque **B**_{**1**}, de manière à permettre le confinement de la chambre **10** à l'intérieur de la structure poreuse. Selon une caractéristique de l'invention, la cavité **4** communique avec la face externe **b**_{**2**} de la plaque **B**_{**1**}, par l'intermédiaire d'au moins un conduit **12** traversant le renfort **11**, en vue de constituer un second réseau de circulation **R**_{**2**}, qui est étanche ou indépendant par rapport au premier réseau **R**_{**1**}. Dans cet exemple, le filtrat récupéré dans la chambre **4** peut être amené sur la face externe **b**_{**2**} de la structure poreuse **B**_{**1**}. Les conduits **12** ont leur surface ou leur paroi rendue étanche à l'aide d'un élément non poreux rapporté ou d'un produit d'étanchéité identique ou non à celui recouvrant les parois des canaux **8**, de manière à obtenir deux réseaux de circulation indépendants l'un de l'autre.

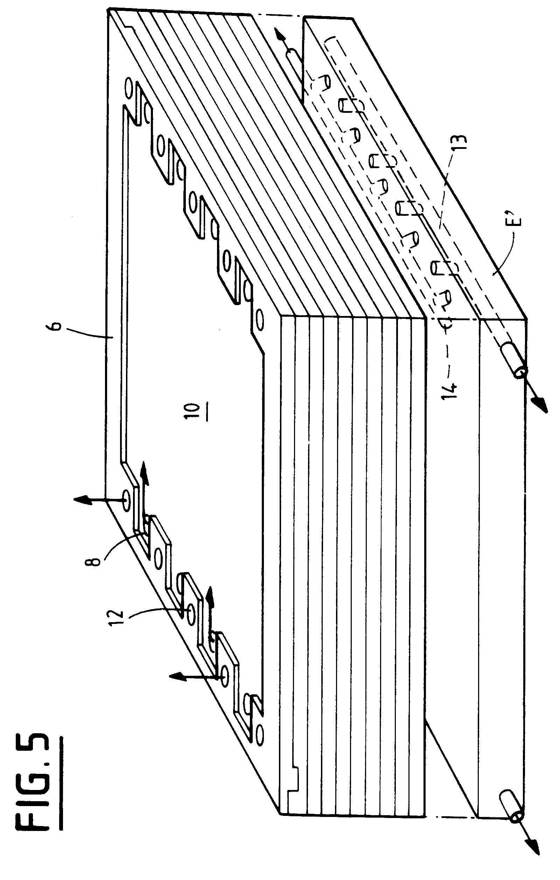

Selon une autre variante de réalisation de l'invention, telle qu'illustrée aux **fig. 4** et **5**, il peut être envisagé de réaliser une unité de filtration comportant un empilement d'au moins deux et, dans l'exemple illustré de trois structures poreuses rigides inorganiques **A, B et C** identiques. Les cavités **4** des structures poreuses **A**, **B** et **C** communiquent entre-elles par les conduits **12**, tandis que les chambres **10** des structures poreuses **A**, **B** et **C** communiquent entre-elles par les canaux **8**. Il est ainsi crée directement à l'intérieur de l'unité de filtration se présentant sous la forme d'une cassette, deux réseaux étanches **R**_{**1**} et **R**_{**2**} respectivement pour la circulation du milieu liquide à traiter et du filtrat. Bien entendu, la fonction des réseaux **R**_{**1**} et **R**_{**2**} peut être intervertie de sorte que les réseaux **R**_{**1**} et **R**_{**2**} assurent la circulation respectivement, du filtrat et du milieu liquide à traiter.

Avantageusement les éléments d'extremité **E, E'**, peuvent constituer des plaques métalliques de contention, dont le rôle est de permettre l'arrivée et la sortie du fluide à traiter dans le réseau **R**_{**1**} et de recueillir le filtrat provenant du réseau **R**_{**2**}. Selon une caractéristique de l'invention, ces plaques de poussée **E** et de contre-poussée **E'**, sont réalisées en un matériau rigide inorganique dans lequel sont ménagés des canalisations **13** d'amenée et de retour du milieu liquide à traiter et une ou plusieurs canalisations **14** de récupération du filtrat. Afin d'éviter le mélange entre les fluides des deux réseaux, les plaques inorganiques de poussée **E** et de contre-poussée **E'** sont réalisées en une matière inorganique de porosité nulle. Dans le même but, il peut être envisagé de recouvrir toutes les surfaces des canalisations à l'aide d'un produit d'étanchéité. Les plaques de poussée **E** et de contre-poussée **E'** sont fixées sur les appuis **6** ou renforts **11** à l'aide d'un matériau approprié.

L'unité inorganique de filtration ainsi réalisée, appelée une brique, est formée par un empilement de plaques inorganiques, par exemple en nombre de l'ordre de 10 à 15, permettant sa fabrication selon un processus industriel. Une telle brique, de par sa conception intègre directement les passages de communication entre le réseau de circulation du fluide à traiter et le réseau de récupération du filtrat par la mise en oeuvre des appuis **6** et des renforts **11** qui assurent le passage étanche respectif des canaux **8** et des conduits **12**. Les appuis **6** et les renforts **11** assument une fonction supplémentaire qui est celle d'assurer la résistance mécanique de chaque structure poreuse lorsque celle-ci travaille en compression. La section droite des appuis et des renforts ainsi que leur nombre sont définis de manière que la surface de la structure poreuse, en dehors des appuis et des renforts, se déforme d'une quantité inférieure à la déformation de rupture.

Il est à considérer que la mise en oeuvre des renforts **11** et des appuis **6** sur les faces opposées des structures poreuses, permet à ces dernières de résister à une contre-pression de décolmatage appliquée dans la ou les cavités **4**. Cette pression opposée par rapport à celle de transfert, permet de décoller les matières déposées sur les couches séparatrices **3**. Les appuis **6** et les renforts **11** assurent, ainsi une fonction de résistance mécanique des structures poreuses et une fonction de passage étanche entre le réseau du milieu liquide à traiter et le filtrat.

Les appuis **6** et les renforts **11** peuvent être en regard les uns des autres ou décalés d'une face à l'autre d'une structure poreuse. Ces appuis **6** ou renforts **11** permettent ainsi de réduire la surface d'action de la pression en limitant la force et, par suite, la flexion appliquée. La géométrie et la disposition des appuis **6** et des renforts **11** dépendent donc des caractéristiques de flexion du matériau des structures poreuses et des pressions de transfert et de décolmatage. Ils peuvent être disposés, sous la forme de bandes périphériques, complétées si nécessaire, par des appuis ou renforts à caractère ponctuel **6**_{**2**}.

Il est à noter que la disposition des appuis **6** et des renforts **11** impose celle des canaux **8** et conduits **12**. Il peut ainsi être prévu de réaliser par exemple, **n** passages alignés selon l'un au moins des côtés de la plaque, combinés ou non à **n** passages alignés selon au moins un axe perpendiculaire. Dans l'exemple illustré, les conduits **12** et les canaux **8** sont réalisés selon deux côtés opposés de la structure poreuse et se trouvent alignés selon une direction sensiblement parallèle aux côtés.

### POSSIBILITE D'APPLICATION INDUSTRIELLE :

L'unité de filtration selon l'invention est apte à concentrer, trier ou extraire des espèces moléculaires ou particulaires contenues dans un milieu liquide qui exerce une pression donnée sur la membrane. L'unité selon l'invention peut ainsi être utilisée dans le domaine de la nano-filtration, l'ultra-filtration, la microfiltration, la filtration ou l'osmose inverse.

## Revendications

1. Unité inorganique de filtration d'un milieu liquide **(2)** en vue de récupérer un filtrat, l'unité comportant au moins une structure poreuse rigide inorganique **(A, B, C)**, interposée entre un élément d'extrémité **(E)** et un contre-élément d'extrémité **(E')**, chaque structure poreuse présentant une première **(a**_{**1**}**)** et une seconde **(a**_{**2**}**)** faces principales opposées l'une de l'autre, et comportant une cavité **(4)** ménagée dans la structure à distance des deux faces en délimitant des appuis **(6, 6**_{**1**}**)** qui assurent une continuité de matière entre les faces opposées, la cavité ou les faces principales étant recouvertes par au moins une couche séparatrice **(3)**,
caractérisée en ce que la cavité **(4)** est confinée à l'intérieur de la structure poreuse en étant délimitée par au moins un appui **(6**_{**1**}**)** formant une bordure périphérique, la cavité **(4)** débouchant par au moins un conduit **(12)** à parois étanches sur au moins l'une des faces principales, et en ce que la structure poreuse **(A, B, C)** comporte au moins un canal **(8)** à parois étanches débouchant sur les deux faces **(a**_{**1**}**, a**_{**2**}**)** et ménagé pour traverser un appui **(6, 6**_{**1**}**)**, en vue de constituer un premier réseau de circulation **(R**_{**1**}**)** étanche vis-à-vis de la cavité **(4)**.

2. Unité selon la revendication 1, caractérisée en ce que:
- elle comporte au moins une structure complémentaire poreuse, rigide et inorganique **(B)** montée sur l'une des faces de la structure poreuse **(A)** pour définir par leurs faces en correspondance, une chambre de circulation **(10)** raccordée au premier réseau **(R**_{**1**}**)** et délimitée par au moins un renfort **(11)** périphérique formant une continuité de matière entre les structures **(A, B)**,
- le conduit **(12)** à parois étanches, réalisé pour communiquer avec la cavité **(4)** traverse de part en part la structure complémentaire, par les renforts **(11)**, pour constituer un second réseau de circulation **(R**_{**2**}**)**, étanche vis-à-vis du premier réseau **(R**_{**1**}**)**.

3. Unité selon la revendication 1, caractérisée en ce que la structure poreuse **(A)** est associée sur au moins l'une de ses faces, à au moins une structure poreuse complémentaire identique **(B, C)**, définissant par leurs faces en correspondance, une chambre de circulation **(10)** raccordée au premier réseau **(R**_{**1**}**)**, cette structure poreuse complémentaire **(B, C)** étant pourvue, d'une part, d'au moins un canal **(8)** à parois étanches ménagé pour déboucher sur les deux faces de la structure poreuse complémentaire en étant raccordé au premier réseau de circulation **(R**_{**1**}**)** et, d'autre part, d'au moins une cavité **(4)** ménagée à distance des deux faces opposées de la structure poreuse complémentaire et communiquant par le conduit **(12)** à parois étanches avec la cavité **(4)** de la structure poreuse adjacente afin de constituer un second réseau de circulation **(R**_{**2**}**)**, étanche vis-à-vis du premier réseau **(R**_{**1**}**)** .

4. Unité selon l'une des revendications 1 à 3, caractérisée en ce qu'elle est constituée d'un empilement de structures poreuses rigides inorganiques **(A, B, C)** précédemment définies interposées entre les éléments de poussée **(E)** et de contre-poussée **(E')**.

5. Unité selon la revendication 4 dépendante de la revendication 2 ou 3, caractérisée en ce que les éléments de poussée **(E)** et de contre-poussée **(E')** sont fixés de manière étanche sur les appuis **(6)** ou renforts **(11)** et sont aménagés pour comporter des canalisations **(13)** d'amenée et de retour du milieu liquide à traiter, raccordées au premier réseau de circulation **(R**_{**1**}**)**, et au moins une canalisation de récupération **(14)** du filtrat raccordée au second réseau de circulation **(R**_{**2**}**)**.

6. Unité selon la revendication 5, caractérisée en ce que les éléments de poussée **(E)** et contre-poussée **(E')** sont réalisés chacun par une plaque rigide inorganique comportant lesdites canalisations étanches **(13, 14)**.

7. Unité selon l'une des revendications 1 à 3, caractérisée en ce que chaque structure poreuse **(A, B, C)** comporte au moins un appui **(6)** ou renfort **(11)**, à caractère ponctuel délimitant respectivement la cavité **(4)** et la chambre **(10)** et assurant une fonction de résistance mécanique.

8. Unité selon l'une des revendications 1 à 4, caractérisée en ce que chaque structure poreuse **(A, B, C)** est formée par deux plaques **(A**_{**1**}**, A**_{**2**}**)**.

9. Unité selon la revendication 5, caractérisée en ce que chaque structure poreuse **(A, B, C)** est formée par deux plaques réalisées d'une manière symétrique.

10. Unité selon l'une des revendications 1 à 3, caractérisée en ce que la paroi des canaux **(8)** et des conduits **(12)** est rendue étanche à l'aide d'un produit adapté ou d'un élément non poreux rapporté.

## Claims

1. Inorganic filtration unit for a liquid medium (2) with a view to recovering a filtrate, the unit comprising at least one inorganic, rigid, porous structure (A, B, C), interposed between an end element (E) and an end counter-element (E'), each porous structure presenting first (a₁) and second (a₂) principal faces opposite each other, and comprising one cavity (4) arranged in the structure at a distance from the two faces, defining bearings (6, 6₁) that ensure a continuity of matter between the opposite faces, the cavity or the principal faces being coated with at least one separating layer (3),
characterised in that the cavity (4) is confined within the porous structure by being defined by at least one bearing (6₁) forming a peripheral border, the cavity (4) opening out via at least one conduit (12) with tight walls on at least one of the principal faces, and in that the porous structure (A, B, C) comprises at least one channel (8) with tight walls opening out on the two faces (a₁, a₂) and arranged to traverse a bearing (6, 6₁) with a view to constituting a first circulation network (R₁) tight with respect to the cavity (4).

2. Unit according to claim 1, characterised in that:
- it comprises at least one complementary, porous, rigid and inorganic structure (B) assembled on one of the faces of the porous structure (A) so as to define by their faces in register, a circulation chamber (10) connected to the first network (R₁) and defined by at least one peripheral reinforcement (11) forming a continuity of matter between the structures (A, B),
- the conduit (12) with tight walls achieved for the purpose of communicating with the cavity (4) traverses right through the complementary structure via reinforcements (11) to constitute a second circulation network (R₂), tight with respect to the first network (R₁).

3. Unit according to claim 1, characterised in that the porous structure (A) is associated on at least one of its faces, with at least one identical complementary porous structure (B, C), defining by its face in register with that of the porous structure, a circulation chamber (10) connected to the first network (R₁), this complementary porous structure (B, C) being provided, on the one hand, with at least one channel (8) with tight walls arranged to open out on the two faces of the complementary porous structure, being connected to the first circulation network (R₁) and, on the other hand, with at least one cavity (4) arranged at a distance from the two opposite faces of the complementary porous structure and communicating via the conduit (12) with tight walls with the cavity (4) of the adjacent porous structure in order to constitute a second circulation network (R₂), tight with respect to the first network (R₁).

4. Unit according to one of claims 1 to 3, characterised in that it is constituted by a stack of inorganic, rigid, porous structures (A, B, C) as previously defined that are interposed between the thrust (E) and counter-thrust (E') elements.

5. Unit according to claim 4 dependent on calm 2 or 3, characterised in that the thrust (E) and counter-thrust (E') elements are fixed in tight manner on the bearings (6) or reinforcements (11) and are arranged to comprise pipes (13) for admission and return of the liquid medium to be treated, connected to the first circulation network (R₁) and at least one pipe (14) for recovering the filtrate, connected to the second circulation network (R₂).

6. Unit according to claim 5, characterised in that the thrust (E) and counter-thrust (E') elements are each constituted by an inorganic rigid plate comprising said tight pipes (13, 14).

7. Unit according to one of claims 1 to 3, characterised in that each porous structure (A, B, C) comprises at least one bearing (6) or reinforcement (11), of punctual nature, defining respectively the cavity (4) and the chamber (10) and performing a function of mechanical strength.

8. Unit according to one of claims 1 to 4, characterised in that each porous structure (A, B, C) is formed by two plates (A₁, A₂).

9. Unit according to claim 5, characterised in that each porous structure (A, B, C) is formed by two plates made in a symmetrical manner.

10. Unit according to one of claims 1 to 3, characterised in that the walls of the channels (8) and of the conduits (12) are rendered tight with the aid of a suitable product or an added non-porous element.

## Patentansprüche

1. Anorganische Filtriereinheit für ein flüssiges Medium (2) zur Gewinnung eines Filtrats, wobei die Einheit mindestens einen starren, anorganischen, porösen Aufbau (A, B, C) aufweist, der zwischen einem Endelement (E) und einem Gegen-Endelement (E') angeordnet ist, wobei jeder poröse Aufbau eine erste (a₁) und eine zweite (a₂) Hauptfläche aufweist, die einander gegenüberliegen, und eine Aussparung (4) aufweist, die in den Aufbau mit Abstand zu den beiden Flachen eingebracht ist und dabei Auflagen (6, 6₁) begrenzt, die eine durchgehende Materialbrücke zwischen den gegenüberliegenden Flachen sicherstellen, und wobei die Aussparung oder die Hauptflächen von mindestens einer Trennlage (3) abgedeckt sind, dadurch gekennzeichnet, daß die Aussparung (4) im Inneren des porösen Aufbaus eingeschlossen ist und durch mindestens eine Auflage (6₁) begrenzt ist, die einen Umfangsrand bildet, wobei die Aussparung (4) durch mindestens eine Leitung (12) mit dichten Wanden in mindestens eine der Hauptflächen einmündet, und daß der poröse Aufbau (A, B, C) mindestens einen Kanal (8) mit dichten Wänden aufweist, der in die beiden Flächen (a₁, a₂) einmündet und zum Durchqueren einer Auflage (6, 6₁) eingebracht ist, um ein erstes Umlaufnetz (R₁) zu bilden, das gegenüber der Aussparung (4) dicht ist.

2. Einheit nach Anspruch 1, dadurch gekennzeichnet, daß sie:
- mindestens einen komplementären, porösen, steifen und anorganischen Aufbau (B) aufweist, der auf einer der Flächen des porösen Aufbaus (A) angebracht ist, um durch ihre entsprechenden Flächen eine Umlaufkammer (10) zu bilden, die mit dem ersten Netz (R₁) verbunden ist und durch mindestens eine Umfangsverstärkung (11) begrenzt ist, die zwischen den Aufbauten (A, B) eine durchgehende Materialbrücke bildet, und
- daß die Leitung (12) mit dichten Wänden, die ausgebildet ist, um eine Verbindung mit der Aussparung (4) herzustellen, den komplementären Aufbau von einer Seite zur anderen und durch die Verstärkungen (11) hindurch durchsetzt, um ein zweites Umlaufnetz (R₂) zu bilden, das gegenüber dem ersten Netz (R₁) dicht ist.

3. Einheit nach Anspruch 1, dadurch gekennzeichnet, daß der poröse Aufbau (A) auf mindestens einer seiner Flächen mindestens einem porösen, komplementären, identischen Aufbau (B, C) zugeordnet ist, wobei diese durch ihre entsprechenden Flächen eine Umlaufkammer (10) festlegen, die mit dem ersten Netz (R₁) verbunden ist, und wobei dieser komplementäre, poröse Aufbau (B, C) einerseit mit mindestens einem Kanal (8) mit dichten Wänden versehen ist, der dazu eingebracht ist, um in die beiden Flächen des komplementären Aufbaus einzumünden, und dabei mit dem ersten Umlaufnetz (R₁) verbunden ist, sowie andererseits mit mindestens einer Aussparung (4), die mit Abstand zu den beiden gegenüberliegenden Flächen des komplementären, porösen Aufbaus eingebracht ist und mittels der Leitung (12) mit dichten Wänden mit der Aussparung (4) des benachbarten porösen Aufbaus in Verbindung steht, um ein zweites Umlaufnetz (R₂) zu bilden, das gegenüber dem ersten Netz (R₁) dicht ist.

4. Einheit nach einem der Ansprüche 1 bis 3, dadurch gekennzeichnet, daß sie von einem Stapel von porösen, starren, anorganischen Aufbauten (A, B, C), wie schon vorher definiert, gebildet ist, die zwischen dem Schubelement (E) und dem Gegenschubelement (E') angeordnet sind.

5. Einheit nach Anspruch 4, soweit abhängig von Anspruch 2 oder 3, dadurch gekennzeichnet, daß das Schubelement (E) und das Gegenschubelement (E') dicht auf den Auflagen (6) oder Verstärkungen (11) befestigt sind und dazu eingerichtet sind, Leitungen (13) zum Heranbringen und zur Rückführung von flüssigem, zu behandelndem Medium, die mit dem ersten Umlaufnetz (R₁) verbunden sind, sowie mindestens eine Rückführleitung (14) für Filtrat aufzuweisen, die mit dem zweiten Umlaufnetz (R₂) verbunden ist.

6. Einheit nach Anspruch 5, dadurch gekennzeichnet, daß das Schubelement (E) und das Gegenschubelement (E') jeweils aus einer steifen, anorganischen Platte gebildet sind, die die genannten dichten Leitungen (13, 14) aufweisen.

7. Einheit nach einem der Ansprüche 1 bis 3, dadurch gekennzeichnet, daß jeder poröse Aufbau (A, B, C) mindestens eine punktartige Auflage (6) oder Verstärkung (11) aufweist, die die Aussparung (4) und die Kammer (10) begrenzt und eine Funktion des mechanischen Widerstandes sicherstellt.

8. Einheit nach einem der Ansprüche 1 bis 4, dadurch gekennzeichnet, daß jeder poröse Aufbau (A, B, C) von zwei Platten (A₁, A₂) gebildet ist.

9. Einheit nach Anspruch 5, dadurch gekennzeichnet, daß jeder poröse Aufbau (A, B, C) von zwei Platten gebildet ist, die symmetrisch ausgebildet sind.

10. Einheit nach einem der Ansprüche 1 bis 3, dadurch gekenn zeichnet, daß die Wand der Kanäle (8) und der Leitungen (12) jeweils mit Hilfe eines geeigneten Produktes oder eines nichtporösen, aufgetragenen Elements abgedichtet ist.
